# EUROPÄISCHE PATENTSCHRIFT

(11) **EP 3 116 771 B1**
(45) Veröffentlichungstag und Bekanntmachung des Hinweises auf die Patenterteilung: **31.07.2019**
(21) Anmeldenummer: 15701176.8
(22) Anmeldetag: 21.01.2015
(51) Int. Cl.: B62J 6/00, B62J 7/04

(54) **GEPÄCKSYSTEM FÜR EIN MOTORISIERTES ZWEIRAD**
LUGGAGE SYSTEM FOR A MOTORCYCLE
SYSTEME DE BAGAGE POUR UNE MOTOCYCLETTE

(30) Priorität: 14.03.2014 DE 102014204740
(43) Veröffentlichungstag der Anmeldung: 18.01.2017
(73) Patentinhaber: Bayerische Motoren Werke Aktiengesellschaft, 80809 München (DE)
(72) Erfinder: BRANDL, Raimund, 85609 Aschheim (DE)
(86) Internationale Anmeldenummer: PCT/EP2015/051131
(87) Internationale Veröffentlichungsnummer: WO 2015/135671

(56) Entgegenhaltungen:
- EP-A2- 0 090 070
- DE-A1-102006 046 005
- DE-U1-202010 009 226
- JP-A- 2008 068 653

## Beschreibung

Die Erfindung betrifft ein Gepäcksystem für ein motorisiertes Zweirad, insbesondere ein Motorrad oder einen Motorroller, gemäß dem Oberbegriff des Anspruchs 1.

Zum Gepäckstransport auf einem Motorrad oder Motorroller werden verbreitet sogenannte Topcases genutzt, also Gepäckkoffer, die so an einer Halterung am rückwärtigen Ende des Zweirads befestigt sind, dass sie oben auf der Halterung angeordnet sind und in Draufsicht mittig über einer Längsachse des Zweirads liegen.

Die DE 20 2010 009 226 U1 offenbart ein Gepäcksystem der eingangs genannten Art, bei dem ein Topcase oder ein anderes darauf befestigtes Gepäckstück in mehreren Stufen zwischen einem Soziusplatz und einem Gepäckträger verschwenkt werden kann.

Es ist ferner aus der DE 38 24 610 A1 bekannt, ein Topcase so auf der Halterung anzubringen, dass es entlang der Fahrzeuglängsrichtung verschoben werden kann, um die Schwerpunktlage des Fahrzeugs beeinflussen zu können. Jedoch bleibt auch in diesem Fall das Problem, dass das Topcase beim Auf- und Absteigen dem Fahrer und vor allem dem Sozius im Weg ist.

Aufgabe der Erfindung ist es, ein Gepäcksystem zu schaffen, das bei einem motorisierten Zweirad ein komfortableres Auf- oder Absteigen ermöglicht.

Die Aufgabe wird erfindungsgemäß gelöst durch ein Gepäcksystem für ein motorisiertes Zweirad mit den Merkmalen des Anspruchs 1.Vor dem Aufsteigen bzw. Absteigen wird das Topcase aus der Fahrbetriebsposition in seine zweite Position verschwenkt, wobei es um die Schwenkachse nach hinten klappt. Nach dem Aufsteigen bzw. Absteigen wird das Topcase wieder in die Fahrbetriebsposition verschwenkt. Auf diese Weise vergrößert sich zum Auf- und Absteigen der Freiraum hinter der Sitzbank, sodass ein komfortableres Überschwingen des rechten Beins über die Sitzbank möglich ist.

Die erfindungsgemäße Sicherungsvorrichtung ist insbesondere dann von Vorteil, wenn das Verschwenken des Topcase von Hand erfolgt, um ein Wegfahren zu verhindern, solange das Topcase in der zweiten Position ist. Die Sicherungsvorrichtung umfasst einen elektrischen Schalter, der beim Verschwenken des Topcase betätigt wird. Der Schalter kann in der zweiten Position oder in der Fahrbetriebsposition geschlossen und in der jeweils anderen Position dementsprechend geöffnet sein. Eine geeignete Elektronik erkennt die Schalterstellung und löst entsprechend die Sicherungsvorrichtung aus, wenn das Topcase in die zweite Position verschwenkt ist.

Die Halterung kann beispielsweise eine Gepäckbrücke des Zweirads oder ein geeigneter, an der Gepäckbrücke befestigter Adapter sein.

Das Topcase ist vorzugsweise um etwa 90° verschwenkbar angeordnet. In diesem Fall steht eine Unterseite des Topcase in der zweiten Position in etwa in der Vertikalen. Es hat sich herausgestellt, dass auf diese Weise eine ausreichende Bewegungsfreiheit für Fahrer und Sozius erreicht wird.

Um das Topcase über das rückwärtige Ende der Halterung hinaus verschwenken zu können, ist es günstig, wenn die Schwenkachse am rückwärtigen Ende der Halterung angeordnet ist.

Ebenso ist es günstig, wenn die Schwenkachse an einer Unterseite des Topcase liegt und gegenüber einem rückwärtigen Ende des Topcase versetzt angeordnet ist, da sich auf diese Weise die Höhe des Überstands des Topcase über die Halterung in der zweiten Position reduzieren lässt, was die Gefahr des Hängenbleibens mit dem Bein weiter reduziert.

Die Schwenkachse ist vorteilhaft durch ein oder mehrere Lager oder Scharniere definiert.

In einer möglichen Ausführungsform erfolgt das Verschwenken des Topcase von der Fahrbetriebsposition in die zweite Position von Hand.

Vorzugsweise ist ein Energiespeicher vorgesehen, der beim Verschwenken des Topcase in die zweite Position aufgeladen wird und der das Zurückstellen des Topcase in die Fahrbetriebsposition zumindest unterstützt. Auf diese Weise wird das Zurückschwenken des Topcase, wenn dies manuell erfolgt, vereinfacht. Es ist vorteilhaft eine Freigabevorrichtung zum Freigeben des Energiespeichers vorgesehen, um den Energiespeicher bis zum Zurückschwenken des Topcase arretiert halten zu können.

Der Energiespeicher kann beispielsweise eine Feder sein, etwa eine Schraubenfeder oder eine Gasdruckfeder, und die Freigabevorrichtung umfasst vorzugsweise eine Arretierung, die geschlossen wird, wenn das Topcase die zweite Position erreicht und die bei Betätigung der Freigabevorrichtung gelöst wird. Auf diese Weise ist ein einfaches Aufladen des Energiespeichers beim Verschwenken des Topcase in die zweite Position sowie ein einfaches Unterstützen des Zurückstellens in die Fahrbetriebsposition gegeben.

Die Sicherungsvorrichtung umfasst vorzugsweise eine Warnleuchte und/oder eine Start- oder Wegfahrsperre. Eine Warnleuchte im Cockpit weist den Fahrer beispielweise darauf hin, dass das Topcase nicht in der korrekten Fahrbetriebsposition ist. Alternativ oder zusätzlich kann etwa das Starten des Motors des Zweirads verhindert oder der Motor beim Versuch des Anfahrens gestoppt werden

Nach einer anderen bevorzugten Ausführungsform ist eine elektromotorische Betätigungsvorrichtung vorgesehen, die das Topcase von der Fahrbetriebsposition in die zweite Position und/oder von der zweiten Position in die Fahrbetriebsposition verschwenkt.

Die elektromotorische Betätigungsvorrichtung kann beispielsweise durch einen Schalter im Cockpit und/oder einen Schalter an der Halterung betätigt werden. Im letzteren Fall ist es auch für den Sozius einfach, das Verschwenken des Topcase zu initiieren, da der Schalter leicht erreichbar ist.

Es wäre auch möglich, eine elektromotorische Betätigung mit einem mechanischen Energiespeicher zu verbinden und beispielsweise elektromotorisch das Topcase von der Fahrbetriebsposition in die zweite Position zu verschwenken und den Energiespeicher zur Rückstellung zumindest unterstützend einzusetzen.

Die Erfindung wird nachfolgend anhand eines Ausführungsbeispiels mit Bezug auf die beigefügten Zeichnungen näher beschrieben. In den Zeichnungen zeigen:
- Figur 1 eine schematische Teilansicht eines motorisierten Zweirads mit einem erfindungsgemäßen Gepäcksystem, bei dem sich das Topcase in einer Fahrbetriebsposition befindet; und
- Figur 2 das motorisierte Zweirad mit dem Gepäcksystem aus Figur 1, bei dem das Topcase in die zweite Position verschwenkt ist.

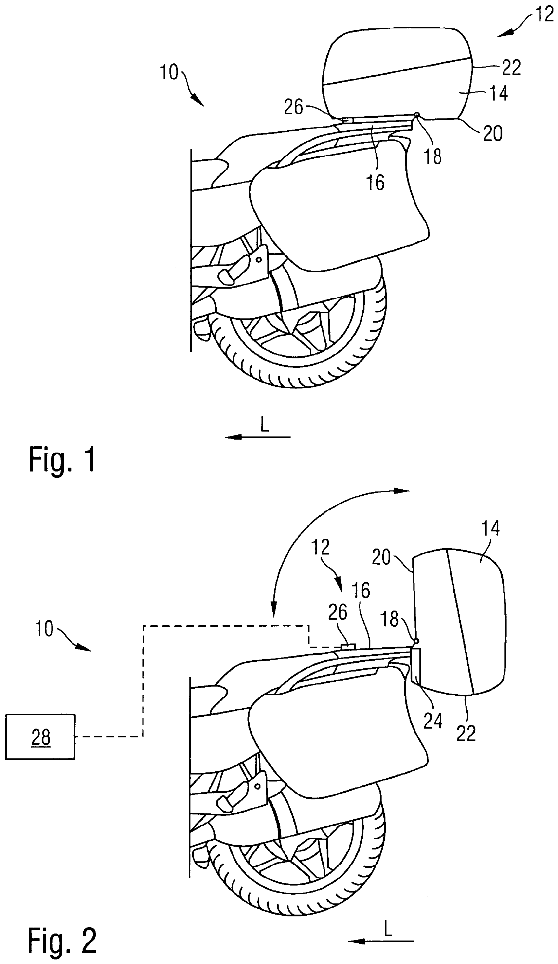

Die Figuren 1 und 2 zeigen ein motorisiertes Zweirad 10, hier ein Motorrad oder ein Motorroller, von dem nur der rückwärtige Teil dargestellt ist.

Das Zweirad 10 ist mit einem Gepäcksystem 12 versehen, das ein Topcase 14 umfasst, das an einer Halterung 16 befestigt ist. Die Halterung 16 ist hier durch eine Gepäckbrücke des Zweirads 10 gebildet.

Figur 1 zeigt das Topcase 14 in einer Fahrbetriebsposition, in der es oben auf der Halterung 16 angeordnet ist und in Draufsicht mittig über einer Längsachse L des Zweirads 10 liegt.

Das Topcase 14 kann von der in Figur 1 dargestellten Fahrbetriebsposition in die in Figur 2 gezeigte zweite Position und zurück verschwenkt werden.

Das Topcase 14 ist hierzu über eine nicht näher dargestellte Lagerung, die eine Schwenkachse 18 definiert, schwenkbar mit der Halterung 16 verbunden, sodass es entlang der Längsachse L des Zweirads 10 nach hinten gekippt werden kann. Die Schwenkachse 18 liegt in diesem Beispiel an einem rückwärtigen Ende der Halterung 16 und an der Unterseite 20 des Topcase 14 und ist ein Stück gegenüber einem rückwärtigen Ende 22 des Topcase 14 versetzt positioniert, sodass bei einem Verschwenken des Topcase 14 dessen rückwärtiges Ende 22 nach unten schwenkt (siehe Figur 2). Die Unterseite 20 steht dann in etwa in der Vertikalen.

Das Topcase 14 ist in der Fahrbetriebsposition durch eine nicht gezeigte Mechanik an der Halterung 16 arretiert, sodass es nicht von alleine in die zweite Position verschwenken kann. Zum Verschwenken muss diese Arretierung gelöst werden.

Das Verschwenken des Topcase 14 erfolgt in einer ersten Ausführungsform manuell, indem der Fahrer oder der Sozius die Arretierung löst und das Topcase 14 in die zweite Position bewegt. Nach dem Auf- oder Absteigen wird das Topcase 14 wieder von Hand zurück in die Fahrbetriebsposition verschwenkt.

Es kann ein (in Figur 2 angedeuteter) Energiespeicher 24, z.B. eine Schraubenfeder oder eine Gasdruckfeder, vorgesehen sein, der einen Teil der beim Verschwenken in die zweite Position aufgebrachten Energie in Form einer Vorspannung speichert, um mit der gespeicherten Energie das Zurückschwenken des Topcase aus der zweiten Position in die Fahrbetriebsposition zu unterstützen. Der gespeicherte Energie wird bei Betätigung einer (nicht dargestellte) Freigabevorrichtung freigesetzt.

In einer zweiten Ausführungsform ist eine elektromotorische Betätigungsvorrichtung vorgesehen (nicht dargestellt), die das Verschwenken des Topcase 14 über einen entsprechenden Antrieb mittels eines Elektromotors bewirkt.

Die elektromotorische Betätigungsvorrichtung kann beispielsweise durch einen Schalter im Cockpit oder einen Schalter an der Halterung 16 betätigt werden.

In dem hier gezeigten Beispiel ist ein elektrischer Schalter 26 vorgesehen, der es ermöglicht, zu erkennen, wenn sich das Topcase 14 nicht in der Fahrbetriebsposition befindet. In diesem Fall ist der Schalter 26 so ausgebildet, dass er in der Fahrbetriebsposition geschlossen ist.

Der Schalter 26 ist mit einer Sicherungsvorrichtung 28 verbunden (angedeutet in Figur 2), die hier eine Warnlampe im Cockpit anspricht, wenn sich das Topcase 14 in der zweiten Position befindet. Außerdem bewirkt die Sicherungsvorrichtung 28 in diesem Beispiel, dass eine Wegfahrsperre eingeschaltet wird, sodass das Zweirad 10 nicht bewegt werden kann, wenn das Topcase 14 in der zweiten Position ist.

## Patentansprüche

1. Gepäcksystem für ein motorisiertes Zweirad (10), mit einer Halterung (16) und einem Topcase (14), wobei das Topcase (14) so an der Halterung (16) befestigt ist, dass es aus einer Fahrbetriebsposition um eine quer zur Längsrichtung (L) des Zweirads (10) liegende Schwenkachse (18) in eine zweite Position verschwenkt werden kann, um ein Auf- oder Absteigen von Fahrer und/oder Sozius zu erleichtern, **dadurch gekennzeichnet, dass** eine Sicherungsvorrichtung (28) vorgesehen ist, um ein Wegfahren zu verhindern, solange das Topcase (14) in der zweiten Position ist, wobei die Sicherungsvorrichtung (28) einen elektrischen Schalter (26) umfasst, der beim Verschwenken des Topcase (14) betätigt wird.

2. Gepäcksystem nach Anspruch 1, **dadurch gekennzeichnet, dass** das Topcase (14) um etwa 90° verschwenkbar ist.

3. Gepäcksystem nach einem der vorhergehenden Ansprüche, **dadurch gekennzeichnet, dass** die Schwenkachse (18) an einem rückwärtigen Ende der Halterung (16) angeordnet ist.

4. Gepäcksystem nach einem der vorhergehenden Ansprüche, **dadurch gekennzeichnet, dass** die Schwenkachse (18) an einer Unterseite (20) des Topcase (14) liegt und gegenüber einem rückwärtigen Ende (22) des Topcase (14) versetzt angeordnet ist.

5. Gepäcksystem nach einem der vorhergehenden Ansprüche, **dadurch gekennzeichnet, dass** ein Energiespeicher (24) vorgesehen ist, der beim Verschwenken des Topcase (14) in die zweite Position aufgeladen wird und der das Zurückstellen des Topcase (14) in die Fahrbetriebsposition zumindest unterstützt, und dass eine Freigabevorrichtung zum Freigeben des Energiespeichers (24) vorgesehen ist.

6. Gepäcksystem nach Anspruch 5, **dadurch gekennzeichnet, dass** der Energiespeicher (24) eine Feder ist, und die Freigabevorrichtung eine Arretierung umfasst, die geschlossen wird, wenn das Topcase (14) die zweite Position erreicht, und die bei Betätigung der Freigabevorrichtung gelöst wird.

7. Gepäcksystem nach einem der vorhergehenden Ansprüche, **dadurch gekennzeichnet, dass** die Sicherungsvorrichtung (28) eine Warnleuchte und/oder eine Start- oder Wegfahrsperre umfasst.

8. Gepäcksystem nach einem der vorhergehenden Ansprüche, **dadurch gekennzeichnet, dass** eine elektromotorische Betätigungsvorrichtung vorgesehen ist, die das Topcase (14) von der Fahrbetriebsposition in die zweite Position und/oder von der zweiten Position in die Fahrbetriebsposition verstellt.

9. Gepäcksystem nach Anspruch 8, **dadurch gekennzeichnet, dass** die elektromotorische Betätigungsvorrichtung durch einen Schalter im Cockpit und/oder an der Halterung (16) betätigt werden kann.

## Claims

1. A luggage system for a motorised two-wheeled vehicle (10), with a support (16) and a top case (14), wherein the top case (14) is fastened to the support (16) such that it can be pivoted out of a riding position about a swivel pin (18) lying transversely to the longitudinal direction (L) of the two-wheeled vehicle (10) into a second position in order to make it easier for the rider and/or pillion passenger to mount or dismount, **characterised in that** a securing device (28) is provided in order to prevent driving-off as long as the top case (14) is in the second position, the securing device (28) comprising an electric switch (26) which is actuated upon pivoting the top case (14).

2. A luggage system according to Claim 1, **characterised in that** the top case (14) is pivotable through approximately 90°.

3. A luggage system according to one of the preceding claims, **characterised in that** the swivel pin (18) is arranged at a rearward end of the support (16).

4. A luggage system according to one of the preceding claims, **characterised in that** the swivel pin (18) lies on an underside (20) of the top case (14) and is arranged offset relative to a rearward end (22) of the top case (14).

5. A luggage system according to one of the preceding claims, **characterised in that** an energy accumulator (24) is provided which is charged upon pivoting of the top case (14) into the second position and which at least supports the restoring of the top case (14) into the riding position, and **in that** a release device for releasing the energy accumulator (24) is provided.

6. A luggage system according to Claim 5, **characterised in that** the energy accumulator (24) is a spring, and the release device comprises a locking means which is locked if the top case (14) reaches the second position, and which is unlocked upon actuation of the release device.

7. A luggage system according to one of the preceding claims, **characterised in that** the securing device (28) comprises a warning light and/or a starting lock or immobiliser.

8. A luggage system according to one of the preceding claims, **characterised in that** an electric-motor-driven actuating device is provided which adjusts the top case (14) from the riding position into the second position and/or from the second position into the riding position.

9. A luggage system according to Claim 8, **characterised in that** the electric-motor-driven actuating device can be actuated by a switch in the cockpit and/or on the support (16).

## Revendications

1. Système de bagage pour un véhicule à deux roues, motorisé (10), comportant une fixation (16) et un top-case (14), celui-ci étant fixé à la fixation (16) pour pouvoir basculer d'une première position de circulation en une seconde position autour d'un axe de basculement (18) transversal à la direction longitudinale (L) du véhicule à deux roues (10), pour faciliter la montée et la descente du conducteur et/ou du passager,
**caractérisé en ce qu'**il comporte
un dispositif de sécurité (28) pour interdire la circulation aussi longtemps que le top-case (14) est dans sa seconde position, le dispositif de sécurité (28) comportant un commutateur électrique (26) actionné par le basculement du top-case (14).

2. Système de bagage selon la revendication 1,
**caractérisé en ce que**
le top-case (14) peut basculer autour d'un angle d'environ 90°.

3. Système de bagage selon l'une des revendications précédentes,
**caractérisé en ce que**
l'axe de basculement (18) est à l'extrémité arrière de la fixation (16).

4. Système de bagage selon l'une des revendications précédentes,
**caractérisé en ce que**
l'axe de basculement (18) est situé sur le côté inférieur (20) du top-case (14) et il est décalé par rapport à l'extrémité arrière (22) du top-case (14).

5. Système de bagage selon l'une des revendications précédentes,
**caractérisé par**
un accumulateur d'énergie (24) qui se charge au basculement du top-case (14) dans sa seconde position, et qui au moins assiste le retour du top-case (14) dans sa position de circulation, et un dispositif de libération pour libérer l'accumulateur d'énergie (24).

6. Système de bagage selon la revendication 5,
**caractérisé en ce que**
l'accumulateur d'énergie (24) est un ressort et le dispositif de libération comporte un moyen de blocage qui est fermé lorsque le top-case (14) arrive dans sa seconde position et est libéré lors de l'actionnement du dispositif de libération.

7. Système de bagage selon l'une des revendications précédentes,
**caractérisé en ce que**
le dispositif de sécurité (28) comporte un voyant et/ou un verrou de démarrage ou de déplacement.

8. Système de bagage selon l'une des revendications précédentes,
**caractérisé par**
un dispositif d'actionnement à moteur électrique qui déplace le top-case (14) de sa position de circulation à sa seconde position et/ou de la seconde position à sa position de circulation.

9. Système de bagage selon la revendication 8,
**caractérisé en ce que**
le dispositif d'actionnement à moteur électrique est activé par un commutateur dans le cockpit et/ou sur la fixation (16).
